# EUROPEAN PATENT APPLICATION

(11) **EP 1 724 762 A2**
(43) Date of publication of application: **22.11.2006**
(21) Application number: 06252117.4
(22) Date of filing: 19.04.2006
(51) Int. Cl.: G11B 7/0065, G11B 7/26

(54) **Optical information recording media, method for manufacturing the same and method for recording/reproducing optical information**

(30) Priority: 19.04.2005 JP 2005120884
(71) Applicant: Fuji Photo Film Co., Ltd., Minami-Ashigara-shi, Kanagawa (JP)
(72) Inventor: Nagate, Hiroshi, Fujinomiya-shi Shizuoka (JP)
(74) Representative: Stevens, Jason Paul

(57) **Abstract**

An optical information recording medium has inner and outer spacers (103,104) at least one of which is formed as an integral part of either one of the top and bottom substrates (101,102) for defining a cell (110) between the top and bottom substrates by bonding the top and bottom substrates through the spacers in which a recording material is infused and then cured so as thereby to form a specified thickness of a holographic recording layer.

## Description

The present invention relates to media suitable for use in optical information recording by using holography, a method for recording optical information in the medium and/or playing back optical information from the medium by using holography, and a method for manufacturing the optical information recording media.

Optical information recording media have been known as one of large-capacity recording media available for recording a mass of data such as high density image data. While rewritable optical mediums such as a magnetic optical disk and a phase change optical disk and recordable optical mediums such as CD recordable (CD-R) have been in practical use, there is a strong demand for large-capacity optical information recording mediums Conventional optical information recording media are used for two-dimensional recording, and there is a definite ceiling to a capacity increase. Therefore, in recent years, holographic recording media are remarked as a three-dimensional recording medium.

Holographic recording for recording optical information in an optical information recording medium by using holography utilizes interference fringes generated inside the recording medium by superposition of information light carrying image information that has a two-dimensional intensity distribution and reference light that is uniform in intensity so as to cause an optical characteristic distribution, thereby recording the information in the form of the interference fringes. In order to reproduce or play back the information, reference light is applied to the optical information recording medium so as to be diffracted by the interference fringes and outgoes as reproducing light having an intensity distribution corresponding to the optical characteristic distribution.

The holographic recording medium is capable of recording optical characteristic distributions three-dimensionally therein and, in consequence, capacitated for multiplex recording, i.e. to partly superpose areas where information are recorded by separate information light. When employing the multiplex recording in the digital volume holography, it is possible to reproduce original information with a high degree of fidelity despite of an inferior signal to sound ratio (SN ratio). This is because an SN ratio for one spot is considerably enhanced. Consequentially, it is possible to perform hundreds of times of multiple recording, so that a greater storage capacity can be obtained in the optical information recording medium.

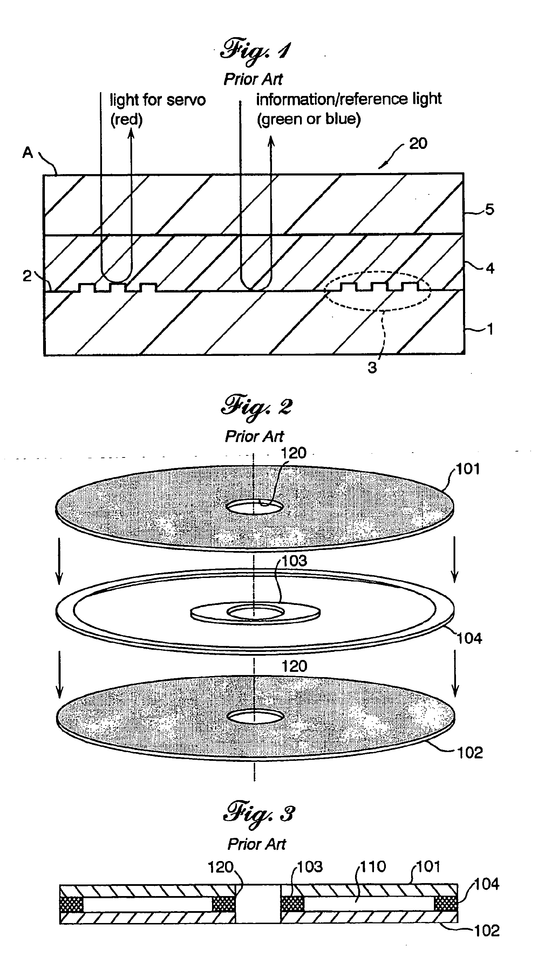

Figure 1 shows a prior art holographic type of optical information recording medium described in, for example, Publication of Japanese Patent Application No. 2002-123949. This optical information recording medium 20 comprises a bottom substrate 1 having a plurality of radial linear servo pit patterns 3, a reflection layer 2 made of, for example, an aluminum film formed over the bottom substrate 1, and a holographic recording layer 4 and a protective substrate 5 formed in this order over the holographic recording layer 4.

Figures 2 and 3 show a prior art holographic optical information recording disk. This optical information recording disk comprises disk-shaped top and bottom substrates 101 and 102 having center or spindle holes 120 and inner and outer spacer means, for example annular spacers, 103 and 104 through which the top and bottom substrates 101 and 102 are bonded, or otherwise secured, to each other so as to form a cell 110 therebetween. The outer annular spacer 104 has an inlet (not shown) through which a holographic recording material is infused into the cell 110. The infused material is thereafter cured to form an optical recording layer.

However, a problem that is encountered by the optical information recording medium is deterioration in quality of the holographic recording layer due to moisture permeating into the optical information recording medium through a gap between the spacers and the bottom substrate. Further, there is such a requirement that the manufacturing process should be simplified for a reduction in manufacturing cost.

There has been proposed a holographic optical information recording disk such as described in, for example, Publication of Japanese Patent Application No. 2004-29476. This optical information recording disk has a structure having a holographic recording layer held between two disk-shaped holding substrates which contains a photo-curable organic material and has an outer marginal part not involved in holographic recording is previously cured with ultraviolet light. However, since the cured holographic recording layer is in a gel resin state, it is uneven in thickness between an inner marginal part and the outer marginal due to resin contraction and external stress. Consequentially, the holographic optical information recording medium encounters uneven recording performance and deterioration in the degree of multiplexing. In addition, it is unclear where a boundary between areas available and unavailable for recording of the holographic recording layer is, so that it is impossible to figure out an accurate storage capacity of the optical information recording medium.

It is an object of the present invention to provide an optical information recording medium which is capable of significantly reducing infiltration of moisture, air and reactive gases and has a long service life.

It is another object of the present invention to provide an optical information recording medium which has a holographic recording layer uniform and appropriate in thickness and is capable of recording information at a significant high density.

It is still another object of the present invention to provide a method for manufacturing a holographic optical information recording medium at a high manufacturing efficiency.

It is a further object of the present invention to provide optical information recording and reproducing methods.

In accordance with one aspect of the present invention, the foregoing objects are accomplished by an optical information recording medium for recording optical information in a holographic recording layer by the use of holography which comprises a transparent top substrate, a bottom substrate and spacer means formed as integral part of at least one of the transparent top substrate and the bottom substrate for defining a cell having a specified depth between the transparent top substrate and the bottom substrate by bonding the other of the transparent top substrate and the bottom substrate to the spacer means. A holographic recording layer is formed by infusing and curing a holographic recording material in the cell. In the case where the optical information recording medium takes the shape of a disk having a spindle hole, the spacer means comprises an inner annular spacer provided around the spindle hole of the optical information recording medium and an outer annular spacer provided along a periphery of the optical information recording medium. The outer annular spacer has an inlet through which the holographic recording material is infused.

At least one of the inner annular spacer and the outer annular spacer is formed as integral part of one of the transparent top substrate and the bottom substrate. The other annular spacer may be formed separately from both the transparent top substrate and the bottom substrate or formed as integral part of the other substrate. Alternatively, either one of the inner annular spacer and the outer annular spacer is formed as integral part of either one of the transparent top substrate and the bottom substrate, and the other annular spacer may be formed as integral part of the other substrate. Further, at least one of the inner annular spacer and the outer annular spacer may comprise top and bottom mating annular spacer halves formed as integral parts of the transparent top substrate and the bottom substrate, respectively, such that the inner annular spacer and the outer annular spacer are snugly fitted together. The top and bottom mating annular spacer halves are bonded through an interference adhesive layer. In this instance, the top and bottom mating annular spacer halves forming the outer annular spacer have openings, respectively, which are brought into alignment with each other by turning the top and bottom substrates relatively to each other so as thereby to form the inlet and is brought out of alignment by turning the top and bottom substrates relatively to each other so as thereby to close the inlet.

The optical information recording medium further comprises a holographic recording layer having s a thickness greater than 100µm and, as needed, a reflection layer coated over patterned servo pits formed as integral parts of the bottom substrate, a filter layer between the base substrate and the holographic recording layer and a gap layer between the reflection layer and the filter layer or gap layers both between the reflection layer and the filter layer and between the holographic recording layer and the filter layer, respectively.

The optical information recording medium records information through coaxially irradiation with information-bearing light and reference light which generates interference fringes in the holographic recording layer by superposition between the information-bearing light and reference light.

In accordance with another aspect of the present invention, the foregoing objects are accomplished by a method for manufacturing the optical information recording medium which comprises the steps of preparing the transparent top substrate and the bottom substrates which are shaped in the form of a disk and have spindle holes, respectively, and at least one of which has at least one of an inner annular spacer provided around the spindle hole and an outer annular spacer having an inlet provided along a periphery thereof is formed as integral part thereof, bonding the transparent top substrate and the bottom substrates together through the inner annular spacer and the outer annular spacer so as thereby to define a cell having a specified depth between the transparent top substrate and the bottom substrates, infusing the cell with a holographic recording material through the inlet and then curing the holographic recording material to form a holographic recording layer in the cell. In the case where the outer annular spacer comprises top and bottom mating annular spacer halves having openings, respectively, the transparent top substrate and the bottom substrate aretumed relatively to each other so as, on one hand, to bring the openings into alignment with each other, thereby forming the inlet before infusion of the holographic recording material into the cell and , on the other hand, to bring the openings out of alignment, thereby closing the inlet after cure of the holographic recording material.

Recording information in the optical information recording medium is performed by coaxially irradiation with information-bearing light and reference light for generating interference fringes in the holographic recording layer by superposition between the information-bearing light and reference light Further, reproducing the information from the optical information recording medium is performed by irradiating with reference light for regenerating information bearing-reproduction light from the holographic recording layer.

The optical information recording medium of the present invention having the spacer means formed as an integral part the substrate, top or bottom, is enabled to make the holographic recording layer uniform and appropriate in thickness and, in consequence, to realize high density optical information recording, and besides being prevented from or significantly reduces infiltration of moisture, air and reactive gases into the holographic recording layer from the outside and having a long service life.

The optical information recording method realizes high density optical information recording in the optical information recording medium. The optical information reproducing method realizes precise optical information reproduction from the optical information recording medium.

The foregoing and other objects and features of the present invention will be clearly understood from the following detailed description when read with reference to the accompanying drawing, wherein the same reference numerals are used to denote the same or similar parts throughout the drawings and in which:
Figure 1 is a schematic sectional view of a prior art optical information recording medium;
Figure 2 is an exploded perspective view of a shell construction of a prior art optical information recording medium taking the form of a disk;
Figure 3 is a sectional view of the shell construction of the optical information recording disk shown in Figure 2;
Figure 4 is an exploded perspective view showing a process of manufacturing an optical information recording medium taking the form of a disk according to an embodiment of the present invention in which inner and outer spacers are formed as integral part of a bottom substrate;
Figure 5 is a sectional view of the shell construction of the optical information recording disk shown in Figure 4;
Figure 6 is an exploded perspective view showing a process of manufacturing an optical information recording medium taking the form of a disk according to another embodiment of the present invention in which an inner spacer is formed as integral part of a bottom substrate;
Figure 7 is an exploded perspective view showing a process of manufacturing an optical information recording medium taking the form of a disk according to still another embodiment of the present invention in which inner and outer spacers formed as integral part of both of a top and a bottom substrates;
Figure 8A is a schematic sectional view of the optical information recording medium before assembled;
Figure 8B is a sectional view of the optical information recording medium after assembled;
Figure 9 is an enlarged partial sectional view of the optical information recording medium;
Figure 10 is an enlarged explanatory view of the optical information recording medium in which an inlet for infusion of a recording material is aligned;
Figure 11 is an enlarged explanatory view of the optical information recording medium in which the inlet is closed;
Figure 12 is a schematic sectional view of an optical information recording medium according to one embodiment of the present invention;
Figure 13 is a schematic sectional view of an optical information recording medium according to another embodiment of the present invention;
Figure 14 is a schematic illustration of an optical system of an optical information recording and reproducing apparatus; and
Figure 15 is a block diagram illustrating an overall structure of the optical information recording and reproducing apparatus.

An optical information recording medium of the present invention will be described as taking the form of a disk. The optical information recording medium comprises a holographic recording layer, a filter layer, a reflection layer, first and second gap layers, and, additionally, other layers as appropriate, formed between a top and a bottom substrate.

The optical information recording medium has a shell structure comprising a top and a bottom substrate secured to each other through an inner and an outer annular spacer by which a cell for receiving a recording material is formed. Specifically, the inner and outer annular spacers, that are provide along a center or spindle hole and a periphery of the optical information recording medium so as to define a thickness of the holographic recording layer, may be both formed as integral parts of either one of the top and the bottom substrate or may be separately formed as integral parts of the top and the bottom substrate, respectively. The optical information recording medium having a shell structure thus formed has a uniform and most appropriate thickness and capable of performing high density optical information recording, besides being capable of eliminating or significantly reducing infiltration of moisture and extending its service life. Further, the integral shell structure enables a simplified process of manufacturing the optical information recording medium due to a curtailed step of bonding the annular spacers, and hence reduces a manufacturing cost of the optical information recording medium.

The annular spacer, inner or outer, is not bounded by shape, size and material as long as provided as an integral part of the top substrate or the bottom substrate and may be designed appropriately according to applications of the optical information recording medium. Specifically, the annular spacer may have a cross section shaped such as, for example, square, rectangular, trapezoidal or elliptical and a thickness (excluding the substrate) preferably in a range from 100 to 1000µm in a general way, and may be preferably made of the same material as the substrate. The annular spacer, that is formed as an integral part of the substrate, is made of the same material as the substrate such as glass, ceramic and a resin and, more preferably, a resin in terms of moldability and molding cost.

The material of the spacer is not bounded by type and may be selected appropriately according to purposes or applications of the optical information recording medium. Examples of the spacer material include acetate resins such as triaccetylcellulose, polyester resins, polyethersulfone resins, polysulfone resins, polycarbonate resins, polyamide resins, polyimide resins, polyolefin resins, acryl resins, polynorbomen resins, cellulosic resins, polyallylate resins, polystyrene resins, polyvinyl alcohol resins, polyvinyl chloride resins, polyvinyliden chloride resins, polyacrylic resins, etc. These resins may be synthesized or products on the market and may be used individually or in any combination of two or more. As will be described later, the molding process of the annular spacer, inner or outer, is not bounded by type and may be selected from known molding processes according to purposes or applications of the optical information recording medium.

The substrate, top or bottom, is not bounded by shape, structure and size and may be designed appropriately according to applications of the optical information recording medium. The substrate is preferably made in the shape of a disc or a card. It is preferred for the substrate to be made of a material capable of providing sufficient mechanical strength for the optical information recording medium. At least one of the substrates at an incident side through which information-bearing light and/or reference light enter and impinge the holographic recording layer is to have sufficiently high transmittance for different wavelengths of the information-bearing light and/or reference light.

The substrate is provided with a plurality of radial linear address servo areas, which serve as locating regions, arranged at regular angular intervals so as to form a sector-shaped data area between each circumferentially adjacent radial linear address servo areas. Each address servo area has focusing/tracking servo information and address information previously formed by emboss pits (servo pits) which enables focusing and tracking servo control operation in a sampled servo method. In this instance, the focusing servo may be performed by using a reflective surface of the reflection layer. It is possible to employ, for example, wobble pits for the tracking servo information. When the optical information recording medium takes the shape of a card, the substrate is not always necessary to have patterned servo pits.

The substrate is not bounded by thickness and may have an appropriate thickness (excluding the substrate), preferably in a range from 0.1 to 5mm and more preferably in a range of from 0.3 to 2 mm, according to purposes or applications of the optical information recording medium. The substrate possibly causes uncontrollable shape deformation during storage if having a thickness less than 0.1 mm and makes the whole optical information medium too heavy to load a drive motor in excess if having a thickness greater than 5 mm.

The holographic recording layer, that is capable of recording optical information by using holography, is made of such a material as varying optical characteristics such as optical absorptivity, a refractive index or the like according to intensity of electromagnetic waves having a specified wavelength.

The holographic recording material is not bounded by type and may be selected appropriately according to purposes or applications of the optical information recording medium. Examples of the holographic recording material include photopolymers which are polymerized by irradiated light, photorefractive materials which are modulated in refractive index by a space charge distribution caused by irradiated light, photochromic materials which are modulated in refractive index due to isomerization of molecules caused by irradiated light, inorganic materials such as a lithium niobate and a barium titanate, and chalcogen materials. Among them, it is especially preferred to use a photopolymer.

The photopolymer is not bounded by type and may be selected appropriately according to purposes or applications of the optical information recording medium. For example, the photopolymer may contain monomers and a photoinitiator, and, if necessary, a sensitizer, oligomers and other components.

Examples of the photopolymers include those described in "Photopolymer Handbook" (Kogyou Chosakai Publishing Co., Ltd.: 1989); "Photopolymer Technology" (Daily Industrial Newspapers: 1989); PIE Proceedings Vol. 3010 (1997) and Vol. 3291 (1998) of Society of Photo-Optical Instrumentation Engineers (SPIE); U.S. Patent Nos. 4,942,112, 4,959, 284, 5,759,721 and 6,221,536; Publication of International Application Nos. 97/13183, 97/44714 and 99/26112; Japanese Patent Nos. 2849021, 2873126, 2880342, 3057082 and 3161230; and Publication of Japanese Patent Application Nos. 2000-275859 and 2001-316416.

Examples of a method for changing optical characteristics of the holographic recording layer with information light include a method using diffusion of a low molecular weight component The holographic recording layer may be added with a component that diffuses in a direction opposite to a polymerizing component in order to alleviate a volume change during polymerization or may be added with a compound having an acid cleavage structure in addition to a polymer. In the case where a photopolymer containing the low molecular weight component is used for the holographic recording layer, some holographic recording layers are required to have a liquid retention structure therein. Further, when adding a compound having an acid cleavage structure, a volume change can be controlled by compensating expansion due to cleavage and contraction due to polymerization of monomers.

The monomers are not bounded by type and may be selected appropriately according to purposes or applications of the optical information recording medium. Examples of the monomers include radical polymerization type monomers having an unsaturated bond such as an acryl group or a methacryl group and cationic polymerization type monomers having an ether structure such as an epoxy ring or an oxetane ring. These monomers may be monofunctional or multifunctional. Further, they may be of a type utilizing a bridging reaction. Examples of the radical polymerization type monomers include acryloyl morpholine, phnoxyethyl acrylate, isobomyl acrylate, 2-hydroxypropyl acrylate, 2-ethylhexyl acrylate, 1,6-hexanediol diacrylate, tripropylene glycol diacrylate, diacrylate of propylene oxide modified neopentyl glycol, 1,9-nonandiol diacrylate, hydroxypivalate neopentyl glycol diacrylate, diacrylate of ethylene oxide modified bisphenol A, polyethylene glycol diacrylate, pentaerythritol triacrylate, pentaerythritol tetraacrylate, pentaerythritol hexaacrylate, triacrylate of ethylene oxide modified glycerol, trimethylolpropane acrylate, triacrylate of ethylene oxide modified trimethylolpropane, 2-naphtol-1-oxyethyl acrylate, 2-carbazole-9-yl ethyl acrylate, (trimethy- silyloxyl) dimethylsilyl propyle acrylate, vinyl-1-naphthoate, N-vinylcatbazole, etc. Examples of the cationic polymerization type monomers include bisphenol A epoxy resins, phenol novolac epoxy resins, grycerol triglycidyl ethers, 1,6-hexanglycidyl ethers, vinyl trimethoxy shiran, 4-vinylphenyl trimethoxyshiran, γ-methacryloxy propyl triethoxyshiran, and compounds expressed by the following constitutional formulas (A) to (E). These monomers may be used individually or in any combination of two or more.

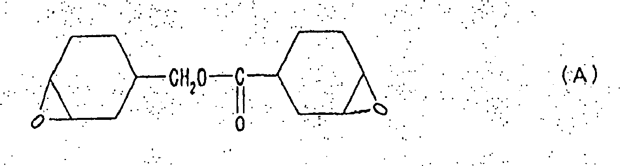

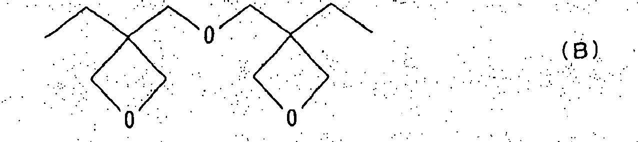

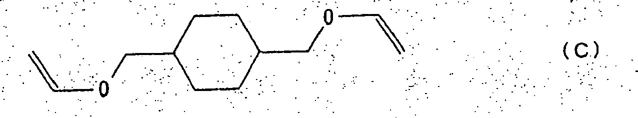

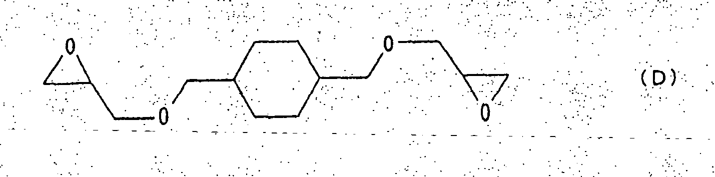

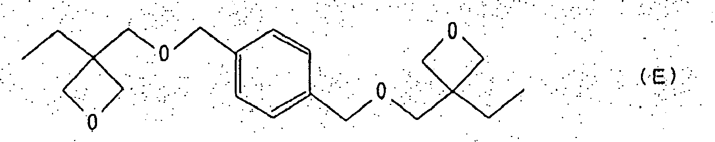

The photoinitiator is not bounded by type as long as it has a sensitivity to information light and may be of a type causing radical polymerization, cationic polymerization, bridging reaction. Examples of the photoinitiator include 2,2'-bis(o-chlorophenyl)-4,4', 5,5'-tetraphenyl-1,1'-biimidazol; 2,4,6-tris(trichloromethyl)-6-(p-methoxyphenyl vinyl)-1,3,5-triazine; diphenyliodonium tetrafluoroborate; diphenyliodonium hexafluorophosphate; 4,4'-di-t-butyl diphenyl iodonium tetrafluoroborate; 4-diethyl aminofenylbenzene diazonium hexafluorophospate; benzoin, 2-hydroxy-2-methyl-1-phenylpropan-2-on; benzophenone; thioxanthene; 2,4,6-trimethylbenzoil diphenylacyl phosphine oxide; triphenylbutyl borate tetraethyl ammonium; and compounds expressed by the following constitutional formula.

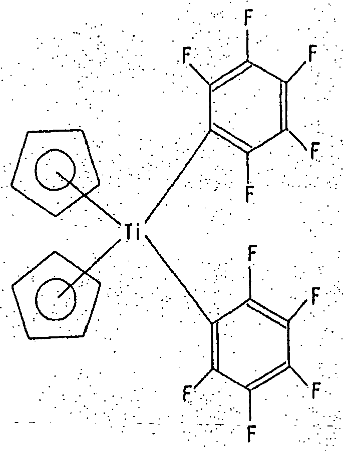

The photorefractive materials are not bounded by type as long as it shows a photorefractive effect and may be selected appropriately according to purposes or applications of the optical information recording medium. For example, the photorefractive material may comprise a charge generating material and transportation material and, if necessary, other components.

Examples of the charge generating material include phthalocyanine pigments/dyes such as metallic phthalocyanine, nonmetallic phthalocyanine and derivatives of them; naphthlocyanine pigments/dyes; azo pigments/dyes such as monoazo, disazoand trisazo; perylene pigments/dyes; indigo pigments/dyes; quinacridone pigments/dyes; polycyclic quinone pigments/dyes such as anthraquinone and anthanthrone; cyanine pigments/dyes; charge transfer complexes as typified by TTF-TCNQ comprising an electron receptive material and an electron releasing material; azulenium salts; fullerene as typified by C₆₀ and C₇₀ ; and methanofullerene that is a derivative of fullerene. These charge generating materials may be used individually or in any combination of two or more.

The charge transport material, that is a material for transporting holes or electrons and may comprise a low molecular compound or a low molecular compound, is not bounded by type. Examples of the charge transport material include nitrogen-bearing cyclic compounds such as indole, carbazole, oxazole, inoxazole, thiazole, imidazole, pyrazole, oxadiazole, pyrazoline, thia-thiazole, triazole; derivatives of the nitrogen-bearing cyclic compounds; hydrazone compounds; triphenylamine; triphenylmethane; butadiene; stilbene; quinine compounds such as anthraquinone diphenoquinone; derivatives of the quinine compounds; fullerene such as C₆₀ and C₇₀; derivatives of the fullerene; π-conjugated polymers or oligomers such as polyacetylene, polypyrrole, polythiophene and polyaniline; σ-conjugated polymers or oligomers such as polysilane and polygermane; and polycyclic aromatic compounds such as anthracene, phenanthrene and coronene. These charge transport materials may be used individually or in any combination of two or more.

The photochromic material is not bounded by type as long as it causes photochromic reaction and may be selected appropriately from various materials such as azobenzene compounds, stilbene compounds, indigo compounds, thioindigo compounds, spiropyran compounds, spirooxazin compounds, fulgide compounds, anthracene compounds, hydrazone compounds and cinnamic acid compounds according to purposes or applications of the optical information recording medium. Among them, it is preferred to use azobenzene derivatives or stilbene derivatives which cause a structural change due to this-trans isomerization by irradiated light, or spiropyran derivatives or spirooxazin derivatives which cause ring opening-ring closing structural change by irradiated light.

Examples of the chalcogen materials include materials comprising chalcogenide glass containing a chalcogen element sand metal particles dispersed in the chalcogenide glass which are able to be diffused in it by irradiated light. The chalcogenide glass is not bounded by type as long as it is made of a nonoxide amorphous material containing a chalcogen element such as S, Te or Se and capable of being photo-doped with metal particles. Examples of the amorphous material containing a chalcogen element include Ge-S glass, As-Sglass, As-Se glass, As-Se-Ce glass. Among them, it is preferred to use Ge-S glass. When using a Ge-S chalcogenide glass, although the composition ratio of Ge and S can be varied according to a wavelength of irradiated light, it is preferred for Ge-S chalcogenide glass to have a chemical composition represented by GeS₂.

The metal particles are not bounded by type as long as they are capable of being photo-doped in the chalcogenide glass and may be selected appropriately from particles of various metals such as Al, Au, Cu, Cr, Ni, Pt, Sn, In, Pd, Ti, Fe, Ta, W, Zn and Ag according to purposes or applications of the optical information recording medium. Among them, it is preferred to use Ag, Au or Cu in terms of photo-doping adaptability and, especially, Ag in terms of distinguished photo-doping adaptability. The metal particle content of the chalcogenide glass is preferably in a range of from 0.1 to 2 % by volume, and more preferably in a range of from 0.1 to 1.0 % by volume, with respect to the whole holographic recording layer. If the metal particle content is less than 0.1 % by volume, the holographic recording layer possibly encounters deterioration of recording accuracy due to insufficiency of a change in transmittance by photo-doping. If the metal particle content is beyond 2 % by volume, the holographic recording layer has photo transmittance too low to cause photo-doping sufficiently.

The holographic recording layer can be formed by various methods known in the art such as an injection method, a deposition method, a wet coating method, a molecular beam epitaxy (MBE) method, a cluster ion beam method, a molecular lamination method, a laser beam (LB) method, a printing method and a transfer method. Among them, it is preferred to form the holographic recording layer by the injection method or the wet coating method. The injection method will be described later in connection with a method for manufacturing the optical information recording medium.

The injection method is performed by using a dispenser. The wet coating method is well performed by using a coating liquid with a holographic recording material dissolved or dispersed therein. The wet coating method is not bounded by type and may be selected from among, for example, an inkjet coating method, a spin coating method, a kneader coating method, a bar coating method, a blade coating method, a cast coating method, a dip coating method and a curtain coating method.

The holographic recording layer is not bounded by thickness and may have a thickness preferably greater than 100µm and more preferably in a range of from 100 to 900µm. The holographic recording layer provides a sufficient S/N ratio even 10 to 300 multiple shift recording is performed when having a preferred thickness and a more enhanced S/N ratio when having a more preferred thickness.

The filter layer, that is provided between the bottom substrate and the holographic recording layer as appropriate, is adapted to transmit a specified wavelength of light, for example red light, (which is hereafter referred to as first light) and to reflect a specified wavelength of light different from the first light, for example green light, (which is hereafter referred to as second light). The filter layer has a thickness preferably in a range of from 1 to 30µm and more preferably in a range of from 3 to 10µm. Preferred examples of the filter layer is a dichroic mirror layer or a cholesteric liquid crystal layer. The cholesteric liquid crystal layer comprises at least a nematic liquid crystal compound and a chiral compound and, if necessary, a polymerizable monomer and other components. A preferred cholesteric liquid crystal layer has a function of circular polarized light separation. Such the cholesteric liquid crystal layer selectively reflects a circular polarized light component that the circular polarized light has a polarization direction coincide with a rotative direction of spiral of the liquid crystal and a wavelength coincide with the pitch of spiral of the liquid crystal. Therefore, the cholesteric liquid crystal layer is constructed such that it transmits circular polarized light having a specified wavelength (red light in this case) and reflects the remaining circular polarized light (green light), thereby separating two beams of circular polarized light from available light in a specified band of wavelength utilizing the selective reflection feature.

It is preferred to set a cholesteric crystal liquid layer-bearing film on the bottom substrate. The cholesteric crystal liquid layer-bearing film is prepared by coating a cholesteric crystal liquid over a backing, orienting and solidifying the coated cholesteric crystal liquid and then punching out the backing into the same disk-shape as the retention recess of the bottom substrate. It is of course allowed to coat a cholesteric crystal liquid directly on the bottom substrate.

The reflection layer, that is formed over patterned servo pits on the bottom substrate, is made of a material having a high reflectivity for both information light and reference light. It is preferred to use Al, an Al alloy, Ag or an Ag alloy when employing information and reference light having wavelengths in a range of from 400 to 780nm, or Al, an Al alloy, Ag, an Ag alloy, Au, A Cu alloy or TiN when employing information and reference light having wavelengths longer than 650nm.

The reflection layer may be composed of a dye type recording layer such as used for DVD-R so that the optical information recording medium is made capable of writing or rewriting directory information such as a hologram recorded area, a rewritten time, an error location, an alteration proceeding and the like in the reflection layer and erasing them using red laser light without having an effect on hologram in the holographic recording layer, beside reflecting red laser light

Formation of the reflection layer is not bounded by forming process and may be performed by various vapor-phase growth known in the art such as vacuum deposition, spattering, plasma chemical vapor deposition (CVD), photo chemical vapor deposition (CVD), ion plating and electronic beam vapor deposition according to applications of the optical information recording medium. Among them, it is preferred to employ spattering in terms of commercial production adaptability and coating quality. The reflection layer has a thickness preferably greater than 50nm and more preferably greater than 100nm in terms of satisfactory reflectivity.

The first gap layer is formed between the filter layer and the reflection layer as appropriate in order to smooth out the top surface of the bottom substrate, and besides to adjust a size of a hologram produced in the holographic recording layer. Because it is required for the holographic recording layer to have a region where information and reference light interfere adjusted to a certain extent, it is effective to provide a gap between the holographic recording layer and the patterned servo pits. The first gap layer is not bounded by thickness and may have a thickness preferably in a range of from 1 to 200µm according to purposes or applications of the optical information recording medium.

The second gap layer is formed between the filter layer and the holographic recording layer as appropriate. The first gap layer is not bounded by material and may be made of a transparent resin film or a norbornen resin film. Examples of such a film material include triacetylcellulose (TAC), polycarbonate (PC), polyethylene terephthalate (PET), polystyrene (PS), polysulfone (PSF), polyvinyl alcohol (PVA), methyl polymethacrylate-polymethylmethacrylate (PMMA), ARTON (trade name) which is produced by JSR and Zeonoa (trade name) which is produced by Nihon Zeon Co., Ltd. according to purposes or applications of the optical information recording medium. The second gap layer is not bounded by thickness and may have a thickness preferably in a range of from 1 to 200µm according to purposes or applications of the optical information recording medium.

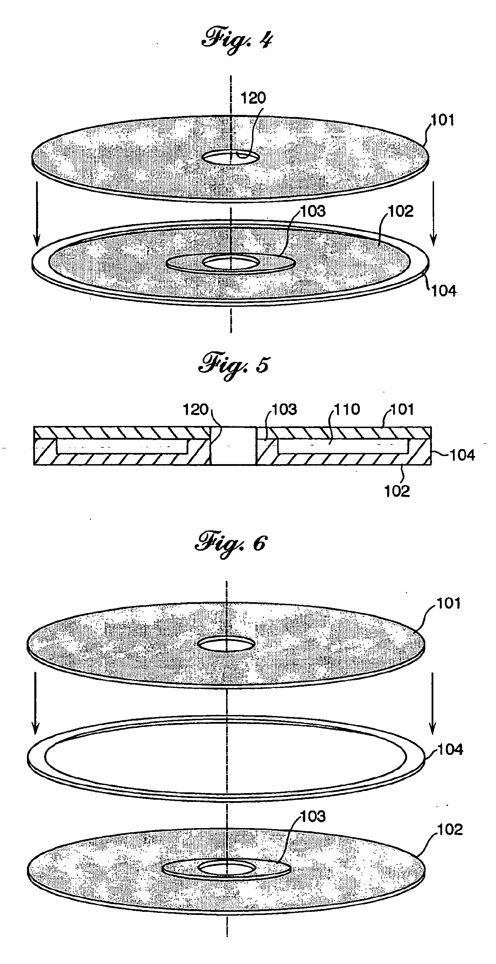

The optical information recording medium, taking the form of a disk, according to an embodiment of the present invention will be described with reference to Figures 4 and 5.

As shown in Figure 4, the optical information recording disk comprises a transparent disk-shaped top substrate 101 and a disk-shaped bottom substrate 102 both of which have a center or spindle hole 102. The bottom substrate 102 has an inner annular spacer 103 and an outer annular spacer 104 formed as integral parts thereof. The top substrate 101 is bonded, or otherwise secured, to the inner and the outer annular spacers 103 and 104, thereby forming a cell 110 between the top and the bottom substrate 101 and 102 as shown in Figure 5. A holographic recording material is infused into the cell 110 through an inlet (not shown) formed in the outer annular spacer 104 and then cured to form a holographic recording layer. The optical information recording medium having the shell structure in which the inner annular spacer 103 and the outer annular spacer 104 are formed as integral parts of the bottom substrate 102 ensures that the cell 110 is uniform in thickness as compared with the conventional medium. Further, the optical information recording medium having the shell structure has an interface only between the top substrate 101 and the annular spacers 103 and 104, so that the optical information recording medium reduces permeating moisture to half in quantity as compared with the prior art optical information recording medium that has two interfaces between the top and bottom substrates and the annular spacers 103 and 104. This makes a useful contribution to a service life of the holographic recording layer in addition to a simplified process of manufacturing the optical information recording medium and hence a reduced manufacturing cost of the optical information recording medium.

In this instance, at least either one of the inner and outer annular spacers 103 and 104 may be formed as an integral part of the substrate, top or bottom. For example, it is may be allowed to form either one of the inner and outer annular spacers, for example the inner annular spacer 103, integrally with the bottom substrate 102 as shown in Figure 6, and to prepare the other annular spacer (the outer annular spacer 104 in this case) separately from the bottom substrate 102. It is also allowed to form the inner and outer annular spacers integrally with the top and bottom substrates 101 and 102, or vice versa, respectively.

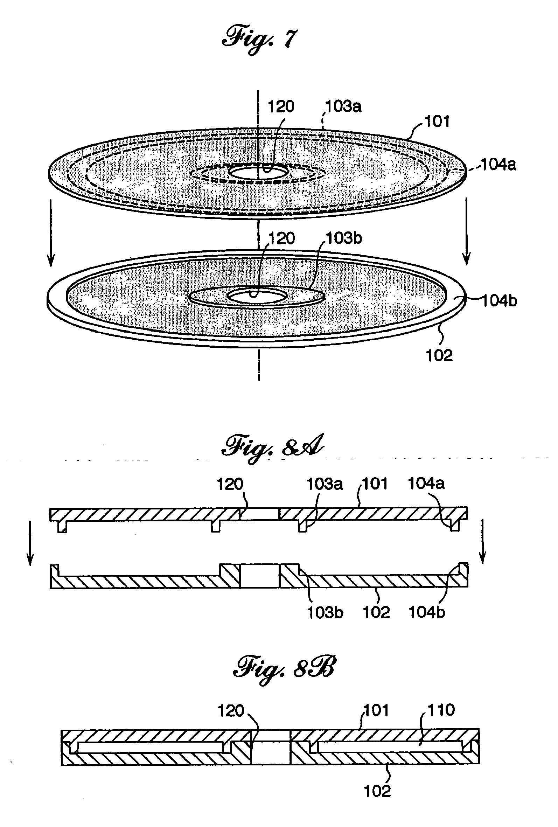

Figures 7, 8A and 8B show an optical information recording medium, taking the form of a disk, according to another embodiment of the present invention. As shown, both inner and outer annular spacers are formed as integral parts of each of the top and bottom substrates 101 and 102. Specifically, the top substrate 101 has an inner annular spacer (a top inner annular spacer) 103a and an outer annular spacer (a top outer annular spacer) 104a. Similarly, the bottom substrate 101 has an inner annular spacer (a bottom inner annular spacer) 101b and an outer annular spacer (a bottom outer annular spacer) 104b. As seen in Figure 8A, the top inner annular spacer 103a has an inner diameter equal to an outer diameter of the bottom inner annular spacer 103b, so that the top and bottom inner annular spacers 103a and 103b are snugly fitted together as shown in Figure 8B. The top outer annular spacer 104a has an outer diameter equal to an inner diameter of the bottom outer annular spacer 104b so that the top and bottom outer annular spacers 104a and 104b are snugly fitted together. The inner annular spacers 103a and 103b and/or the outer annular spacers 104a and 104b may be replaced in relative position with each other. In short, the optical information recording medium of this embodiment has an inner annular spacer made up of top and bottom mating spacer halves 103a and 103b and an outer annular spacer made up of top and bottom mating spacer halves 104a and 104b.

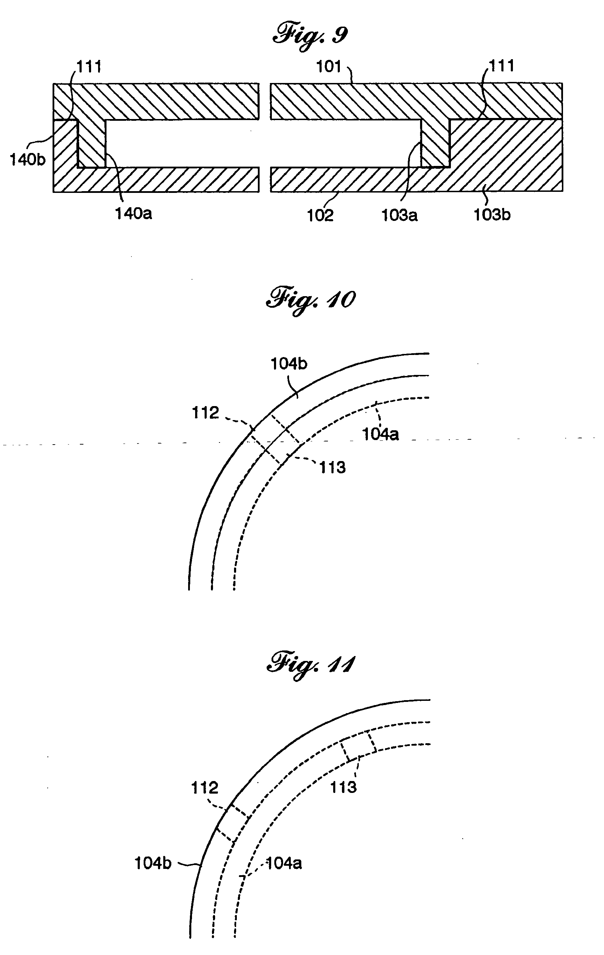

Referring to Figure 9, the mating spacer structure, inner or outer, is improved in quality of fit by forming an interface adhesive layer 111 between the top and bottom mating spacer halves 103a and 103b or 104a and 104b.

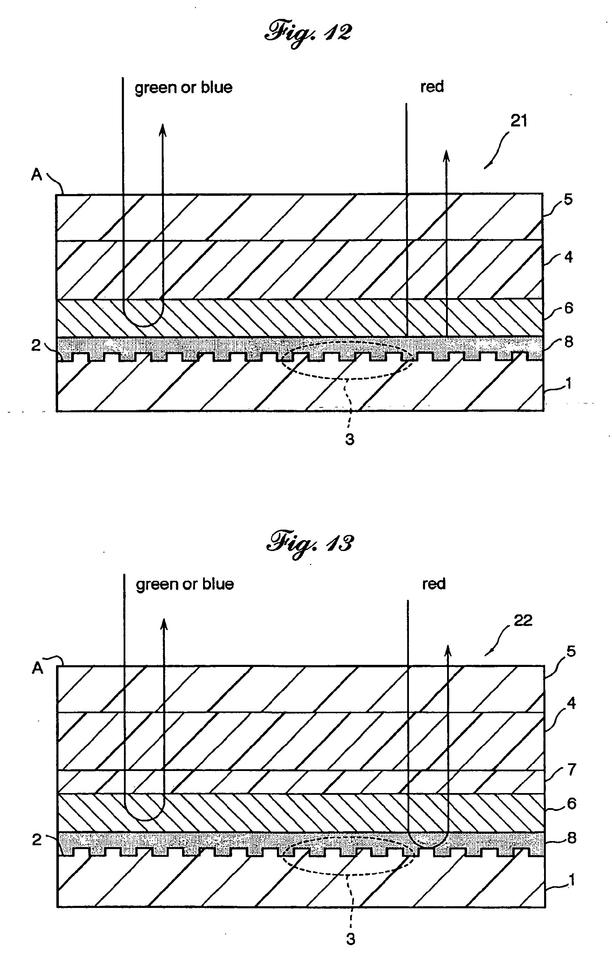

Referring to Figures 10 and 11, the mating structure of outer annular spacer includes an inlet through which a holographic recording material is infused into the cell. Specifically, the optical information recording medium such as shown in Figure 8B is provided with an inlet comprising an opening 112 formed in the bottom outer mating spacer half 104b and an opening 113 formed in the top outer mating spacer half 104a. These openings 112 and 112 are radially aligned with each other for infusion of a holographic recording material in the cell 110. After infusion of the holographic recording material, the top and bottom substrates 101 and 102 are turned relatively to each other to bring the openings 112 and 113 out of alignment In this way, the cell 110 is easily tightly sealed through a relative turn of the top and bottom substrates 101 and 102.

Figure 12 shows the construction of an optical information recording medium 21 according to a first embodiment of the present invention. The optical information recording medium 21 has a bottom substrate 1 and a transparent top substrate 5 which are made of, for example, a polycarbonate resin or glass. A plurality of patterned servo pit clusters 3 are formed allover on one side of the bottom substrate 1. The patterned pit clusters 3 may be formed at a given spacing as shown in Figure 1. The servo pit has a maximum height of 1750Å (175 nm) which is thin enough as compared with thickness of other layers. The bottom substrate 1 is coated with a reflection layer 2 of Al, Au or Pt on one side thereof where the patterned servo pits is formed. The optical information recording medium 21 is provided with a gap layer 8, a filter layer 6 and a holographic recording layer 4 formed in this sequential order on the bottom substrate 1. The gap layer 8, that is formed by coating an ultraviolet cure resin over the reflection layer 2, serves to protect the reflection layer 2 and to adjust an extent of a hologram produced in the holographic recording layer 4. The holographic recording layer 4 is formed so as to be interposed between filter layer 6 and the transparent top substrate 5. The filter layer 6, that is formed by coating a cholesteric liquid crystal over the gap layer 8, serves to transmit red light only and reflect the remaining components of light such as green light or blue light. In this instance, the gap layer 6 may be coated directly over the gap layer 8 or provided by laminating a thin film coated with three-layers of cholesteric liquid crystal on the gap layer 8. In this embodiment in which the filter layer 6 comprises a cholesteric liquid crystal layer, it is necessary for the optical information recording medium to have λ/4 retarder means between the cholesteric liquid crystal layer and an incidence/exit surface of the optical information recording medium (in this case, the surface of the transparent top substrate) as one of its constituents, or otherwise, to be accompanied by a λ/4 retarder plate between the optical information recording medium and a dichroic mirror forming a part of an optical information recording/reproducing apparatus. The λ/4 retarder means or plate operates to shift a wavelength of green light only by a quarter so as to transform green light into circularly polarized light and the remaining light (e.g. red light) into elliptically polarized light.

The optical information recording medium may be disk-shaped or card-shaped. A card-shaped optical information recording medium may not be provided with patterned servo pit clusters. When the optical information recording medium 21 is 1.9mm in thickness, the bottom substrate 1, the gap layer 8, the filter layer 6, the holographic recording layer 4 and the top substrate 5 are 0.6mm, 100µm, 2 to 3µm, 0.6mm and 0.6mm in thickness, respectively.

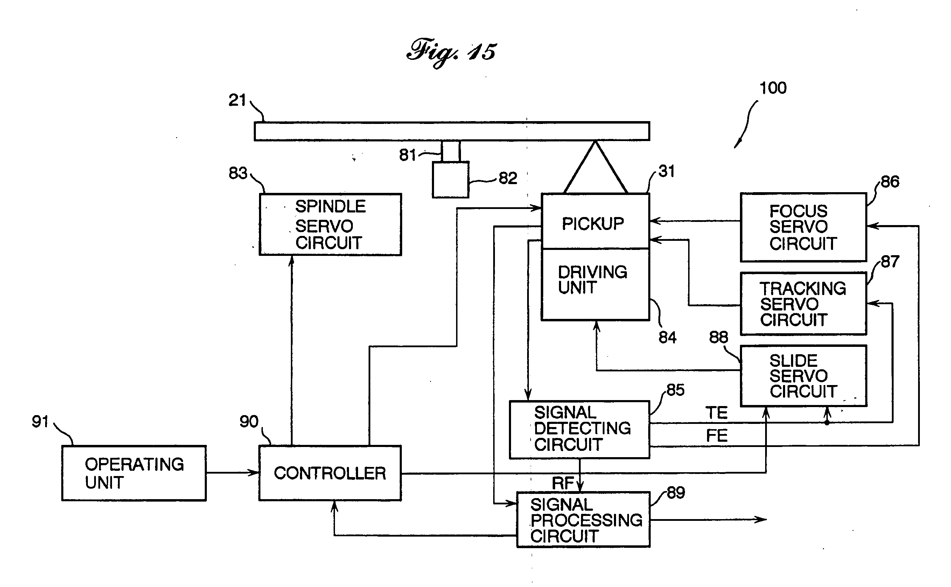

Referring to Figure 14 schematically showing optical information recording/reproducing, laser light (in this case, a red laser light) for servo emanating from a laser source (not shown) and collimated by a condenser lens (not shown) is almost completely reflected by a dichroic mirror 13 and focused on the reflection layer 2 by an objective lens 12. The dichroic mirror 13 takes the form of beam splitting means for reflecting red light only and transmitting green or blue light The laser light entering the incidence/exit surface A of the optical recording medium 21 sequentially passes through the top substrate 5, the holographic recording layer 4, the filter layer 6 and the gap layer 8 and then impinges on and is reflected by the reflection layer 2. The laser light reflected by the reflection layer 2 returns taking a reverse way and comes out from the incidence/exit surface A. The laser light coming out from the optical recording medium 21 is completely reflected by the dichroic mirror 13 and then detected by a photo-sensor (not shown) serving as a servo information detector for detecting servo information used for servo operation including at least focusing servo, tracking servo and slide servo. Since the holographic recording layer 4 is non-photsensitive to a red light, the holographic recording layer 4 is not affected by the laser light passing therethrough and stray laser light reflected diffusely by the reflection layer 2. On the other hand, information light or reference light (in this case, green or blue laser light) emanating from a laser source 18 controlled by a digital light processor (DLP) and collimated by a condenser lens (not shown) is converted into a linearly polarized light by a polarization plate 16 and passes through a half mirror 17 and then is further converted into circularly polarized light by a quarter-wave (λ/4) plate 15. The circularly polarized light passes through the dichroic mirror 13 and is converged by the objective lens 12. Specifically, the converged laser light enters the optical recording medium 21 through the incidence/exit surface A, and then passes through the top substrate 5 and reaches the holographic recording layer 4 where information is recorded by means of an interference pattern formed by information light and reference light. The laser light further passes through the holographic recording layer 4 and is reflected by the filter layer 6 before reaching the bottom of the filter layer 6. The laser light reflected by the filter layer 6 returns taking a reverse way and comes out from the incidence/exit surface A. The laser light coming out from the optical recording medium 21 completely passes through the dichroic mirror 13 and the quarter-wave (λ/4) plate 15. In the case of reproducing reference light, the reflected laser light is reflected by the half mirror 17 and then detected by an image sensor device 14 such as a CMOS sensor or a CCD.

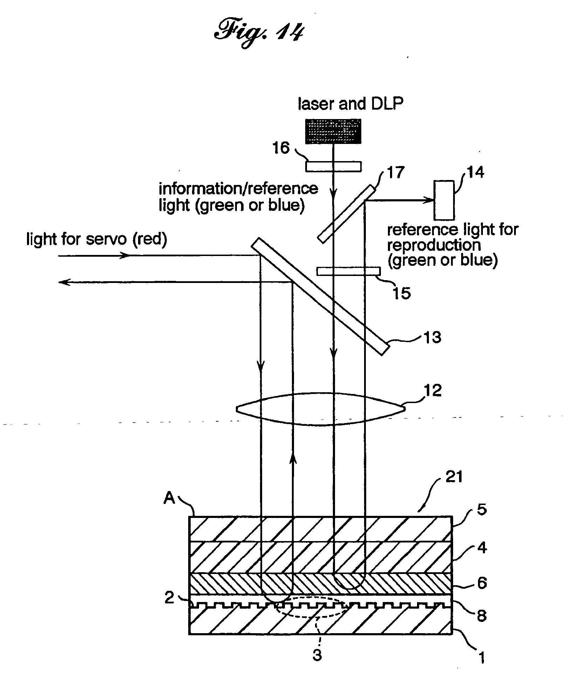

Figure 13 shows the construction of an optical information recording medium 22 according to a second embodiment of the present invention. The optical information recording medium 22 has the same construction as the first embodiment except for another gap layer which is provided between a filter layer and a holographic recording layer. That is, the optical information recording medium 22 has a first gap layer 8, a filter layer 6, a second gap layer 7 and a holographic recording layer 4 formed in this sequential order between a bottom substrate 1 having patterned servo pits 3 coated with a reflection layer 2 and a transparent top substrate 5. The second gap layer 7 is transparent and non photoreactive. If information light and reference light are focused in a substratum forming bottom part of the holographic recording layer 4, excessive consumption of monomers forming the material of the holographic recording layer 4 occurs due to overexposure. This induces a problem of deterioration in multiplex recording ability is encountered by the optical information recording medium 22. For this reason, the substratum of the holographic recording layer 4 is replaced with the second gap layer 8. When the optical information recording medium 22 is 2.2mm in thickness, the bottom substrate 1, the first gap layer 8, the filter layer 6, the second gap layer 7, the holographic recording layer 4 and the top substrate 5 are 1.0mm, 100µm, 3 to 5µm, 70µm, 0.6mm and 0.4mm in thickness, respectively.

Recording information in the optical information recording medium 22 or reproducing the information from the optical information recording medium 22 is performed using the optical information recording/reproducing apparatus shown in Figure 14. The optical information recording medium 22 is irradiated with a laser light (in this case, red laser light) for servo and information and reference light (green or blue). The laser light for servo entering the optical information recording medium 22 through an incidence/exit surface A sequentially passes through the top substrate 5, the holographic recording layer 4, the second gap layer 7, the filter layer 6 and the first gap layer 8 and then impinges on and is reflected by the reflection layer 2. The laser light reflected by the reflection layer 2 returns taking a reverse way and comes out from the incidence/exit surface A. The laser light for servo coming out from the optical recording medium 21 is used for servo operation including at least focusing servo, tracking servo and slide servo. On the other hand, information light or reference light (in this case, green or blue laser light) entering the optical information recording medium 22 through an incidence/exit surface A sequentially passes through the top substrate 5, the second gap layer 7 and reaches the holographic recording layer 4 where information is recorded by means of an interference pattern formed by information light and reference light. The laser light further passes through the holographic recording layer 4 and is reflected by the filter layer 6. The laser light reflected by the filter layer 6 returns taking a reverse way and comes out from the incidence/exit surface A.

A method for manufacturing the optical information recording medium includes at least the steps of preparing the top and bottom substrates, bonding them and forming a holographic recording layer, and other steps as appropriate.

In the step of substrate preparation, substrates, having or not having annular spacers as integral parts, are formed. The substrate is not bounded by molding process and may be molded by various processes known in the art such as film molding, extrusion molding, injection molding, blow molding, compression molding, transfer molding, calender forming, thermoforming, flow molding, laminate molding, and compression molding using a metallic mold according to purposes or applications of the optical information recording medium. Among them, it is especially preferred to employ extrusion molding or injection molding in terms of superior manufacturing efficiency.

In the bonding step, the top and bottom spacers are bonded together using an adhesive or a tackiness agent, or otherwise coupled together. The adhesive is not bounded by type and may be selected appropriately from various known adhesives such as UV cure adhesives, emulsion adhesives, one component adhesives and two component adhesives. The tackiness agent is not bounded by type and may be of a rubber-base type, a silicone type, an acrylic type, an urethane type, a vinyl alkyl ether type, a polyvinyl alcohol type, a polyvinyl pirolidone type, polyacrylamide type or a cellulosic type according to purposes or applications of the optical information recording medium.

In the holographic recording layer forming step, a holographic recording material is infused into the cell 110 through the inlet formed in the outer spacer and then cured as a holographic recording layer. In the embodiment shown in Figures 7, 8A and 8B, the top and bottom substrates are turned relative to each other so as to bring the openings into radial alignment so as thereby to form a straight inlet before infusion of the holographic recording material. On the other hand, the top and bottom substrates are turned relative to each other so as to bring the openings out of alignment so as thereby to seal the cell after before the infusion of the holographic recording material.

The other steps performed as needed include steps of forming a reflection layer, forming a filter layer and a gap layer.

As is apparent from the above description, recording information in the optical information recording medium 21 or 22 is performed by generating interference fringes inside the holographic recording layer 4 by superposition of information-bearing light on a two dimensional intensity distribution and reference light having a nearly uniform intensity so as to record the information in the form of a distribution of optical characteristic. In order to reproduce the information, the optical information recording medium 21 or 22 is irradiated with reference light so as to be distributed by the interference fringes. Consequently, the information is reproduced in the form of the distribution of optical characteristic.

Figure 15 shows an optical information recording/reproducing apparatus 100 for recording information in and reproducing the information from the optical information recording medium 21 of the present invention by way of example. The optical information recording/reproducing apparatus 100 is provided with a spindle 81 to which the optical information according medium 21 is attached, a spindle motor 82 for driving the spindle 81 and a spindle servo circuit 83 for maintaining a specified speed of rotation of the optical information according medium 21. The optical information recording/reproducing apparatus 100 is further provided with a pickup 31 which provides information light and reference light for recording information in the optical information recording medium 21 or reference light for picking up reproducing light to reproduce the information from the optical information recording medium 21 or 22. The pickup 31 is accompanied by a drive unit 84 for controlling movement of the pickup 31 in a radial direction of the optical information recording medium 21. The optical information recording/reproducing apparatus 100 is further provided with various circuits, namely a signal detection circuit 85, a focusing servo circuit 86, a tracking servo circuit 87, a slide servo circuit 88 and a signal processing circuit 89. The signal detection circuit 85 operates to detect a focusing error signal FE, a tracking error signal TE and a reproduction signal RF from output signals of the pickup 31. The focusing servo circuit 86 operates to drive an actuator in the pickup 31 so as to move an objective lens (not shown) in a direction of thickness of the optical information recording medium 21 for performing focusing servo control according to the focusing error signal FE. The tracking servo circuit 87 operates to drive the actuator in the pickup 31 so as to move the objective lens in a radial direction of the optical information recording medium 21 for performing tracking servo control according to the tracking error signal TE. The slide servo circuit 88 operates to control the drive unit 84 so as to move the pickup 31 in a radial direction of the optical information recording medium 21 for performing slide servo control according to the tracking error signal TE and a command signal from a controller 90 which will be described later. The signal processing circuit 89 operative to reproduce of data stored in a data area of the optical information recording medium 21 by decoding data from a CMOS sensor or a CCD array which will be described later and to reproduce basic clocks from the reproduction signal RF provided by the signal detection circuit 85 and to discriminate addresses. The reproduced basic clocks are sent to the spindle servo circuit 83. The controller 90, which comprises CPU, ROM and RAM such that the CPU executes programs stored in the ROM in the RAM as a working area, receives various command signals through an operation control panel 91 and performs overall control of the optical information recording/reproducing apparatus 100. Specifically, the controller 90 receives basic clocks and address and controls the pickup 31, the spindle servo circuit 83 and the slide servo circuit 88.

In order to assess the optical information recording medium of the present invention, practical and comparative examples of the optical information recording medium were prepared by the method of the present invention.

### Practical example 1

An optical information recording medium, taking the form of a disc having a shell structure shown in Figures 4 and 5, was prepared as practical example 1. An optical information recording medium of practical example 1 was comprised by a bottom substrate made up of a polycarbonate disk having a diameter of120mm and a thickness of 0.6mm that has inner and outer spacers having a height of 600µm as integral parts thereof. The bottom substrate was provided with patterned servo pits at regular pitches of 0.74µm all over the surface and coated with an Al reflection layer as a reflection layer. The respective pits were 175nm in depth and 300nm in width. The Al coating layer was formed by DC magnetron spattering so as to have a thickness of 200nm.

Subsequently, a filter layer 6 was prepared beforehand by coating a base film with a cholesteric liquid layer of CM-33 (trade name of Chisso Corporation) and punching out it into a specified size of disk so as to fit right in the retention recess 106. The film as a filter layer 6 thus prepared was bonded to the bottom substrate 102 with an ultraviolet cure adhesive or a tackiness agent with the base film being faced to the servo pits 3 taking care not to allow bubbles to get into the adhesive so that the total thickness of the filter layer 6 including the adhesive layer was 6µm. Further, a top substrate made up of a polycarbonate disk having a diameter of 120mm and a thickness of 0.6mm was bonded to the inner and outer spacers of the bottom substrate using an adhesive so as to form a cell suitable for a holographic recording layer 600µm thick.

Subsequently, a holographic recording material made up of a photopolymer liquid having the following composition was prepared and infused into the cell. More specifically, after filling the cell with the photopolymer liquid to nine-tenths of it through the inlet of the outer spacer using a dispenser and repeating degassing of the photopolymer liquid in a vacuum degassing tank three times, the cell is completely filled with the photopolymer liquid using the dispenser and then the cell was closed up by filling a sealant in the inlet of the outer annular spacer.

| | |
|---|---|
| Photopolymer composition: | |
| Di(urethane acrylate) oligomer (ALU-351: Echo Resins Corporation) | 59 parts by mass |
| Isobornyl acrylate | 30 parts by mass |
| Vinyl benzoate | 10 parts by mass |
| Polymerization initiator (Irgacure 784: Ciba Specialty Chemicals Corporation) | 1 part by mass |

Finally, the photopolymer liquid was cured so as thereby to form a holographic recording layer 4 having a thickness of 600µm. In this manner, the optical information recording medium of practical example 1 was completed as a practical example.

### Practical example 2

An optical information recording medium was prepared as practical example 2 in the same way as that of practical example 1 except for taking the form of a disc having a shell structure shown in Figures 7, 8A and 8B and using top and bottom substrates, each having a diameter of 120mm and a thickness of 0.6mm and provided with inner and outer spacers having a height of 600µm as integral parts thereof.

### Comparative example 1

An optical information recording medium was prepared as comparative example 1 in the same way as that of practical example 1 except for taking the prior art shell structure shown in Figures 2 and 3 formed by top and bottom substrates, each having a diameter of 120mm and a thickness of 0.6mm and inner and outer spacers separate from the top and bottom substrates, each having a height of 600µm as integral.

### Comparative example 2

An optical information recording medium was prepared as comparative example 2 in the same way as that of practical example 1 except for a taking a shell structure shown in Figure 6.

The optical information recording media of the practical and comparative examples were assessed on their properties including recorded information storage stability and thickness uniformity of the holographic recording layer.

The recorded information storage ability was estimated on whether a problem of information reproduction was encountered by the optical information recording media of the practical and comparative examples that were subjected to an accelerated preservation test at a temperature of 60°C and a relative humidity of 90% for one week and graded according to the following standards.
⊚: Very good in storage ability
○: Good in storage ability
Δ: Poor in storage ability (practically acceptable)
×: Very poor in storage ability (practically unacceptable)

The thickness uniformity of the holographic recording layer was estimated on circumferential and radial distributions of thickness of the holographic recording layer peeled off from the base substrate determined using a non-contact laser film thickness meter and graded according to the following standards.
○ : Thickness is uniform at both inner and outer parts
× : Thickness varies

The result of assessment is shown in tabular form below.

| | Storage ability | Uniformity in thickness |
|---|---|---|
| Practical Example 1 | ○ | ○ |
| Practical example 2 | ⊚ | ○ |
| Comparative example 1 | Δ | ○ |
| Comparative example 2 | × | × |

As apparent from the description, the optical information recording medium of the present invention has the holographic recording layer uniform and appropriate in thickness and is capable of recording information at a significant high density, and besides capable of significantly reducing infiltration of moisture, air and reactive gases and having a long service life.

While the exemplary embodiments described above are presently preferred, it should be understood that the embodiments are offered by way of example only. Accordingly, the present invention is not limited to a particular embodiment, but extends to various modifications that nevertheless fall within the scope of the appended claims.

## Claims

1. An optical information recording medium for recording optical information in a holographic recording layer formed between a transparent top substrate and a bottom substrates by the use of holography, **characterized by** spacer means formed as an integral part of at least one of said transparent top substrate and said bottom substrate for defining a cell having a specified depth between said transparent top substrate and said bottom substrate by bonding the other of said transparent top substrate and said bottom substrate to said spacer means and a holographic recording layer formed by infusing and curing a holographic recording material in said cell.

2. An optical information recording medium as defined in claim 1, **characterized in that** said optical information recording medium is in the shape of a disk having a spindle hole and said spacer means comprises an inner annular spacer provided around said spindle hole of said optical information recording medium and an outer annular spacer provided along a periphery of said optical information recording medium, wherein said outer annular spacer has an inlet through which said holographic recording material is infused.

3. An optical information recording medium as defined in claim 2, **characterized in that** at least one of said inner annular spacer and said outer annular spacer is formed as an integral part of one of said transparent top substrate and said bottom substrate.

4. An optical information recording medium as defined in claim 2 or 3, **characterized in that** the other of said inner annular spacer and said outer annular spacer is formed separately from both said transparent top substrate and said bottom substrate.

5. An optical information recording medium as defined in any one of the preceding claims 2 to 4, **characterized in that** either one of said inner annular spacer and said outer annular spacer is formed as integral part of either one of said transparent top substrate and said bottom substrate and the other of said inner annular spacer and said outer annular spacer is formed as integral part of the other of said transparent top substrate and said bottom substrate.

6. An optical information recording medium as defined in claim 2 to 5, **characterized in that** at least one of said inner annular spacer and said outer annular spacer comprises top and bottom mating annular spacer halves formed as integral parts of said transparent top substrate and said bottom substrate, respectively, wherein said inner annular spacer and said outer annular spacer are snugly fitted together.

7. An optical information recording medium as defined in claim 6, **characterized in that** said top and bottom mating annular spacer halves are bonded through an interference adhesive layer.

8. An optical information recording medium as defined in claim 6, **characterized in that** said outer annular spacer comprises top and bottom mating annular spacer halves each of which have openings, respectively, to form said inlet by bringing said openings into alignment with each other.

9. An optical information recording medium as defined in claim 8, **characterized in that** said inlet is closed by turning said transparent top substrate and said bottom substrate relatively to each other so as thereby to bring said openings out of alignment after infusion and cure of said holographic recording material in said cell.

10. An optical information recording medium as defined in any one of the preceding claims 1 to 9, **characterized in that** said holographic recording layer has a thickness greater than 100µm.

11. An optical information recording medium as defined in any one of the preceding claims 1 to 10, **characterized in that** said bottom substrate has patterned servo pits formed integral parts thereof.

12. An optical information recording medium as defined in any one of the preceding claims 1 to 11, **characterized by** a reflection layer coated over said servo pits.

13. An optical information recording medium as defined in any one of the preceding claims 1 to 12, **characterized by** a filter layer between said base substrate and said holographic recording layer.

14. An optical information recording medium as defined in claim 13, **characterized by** a gap layer between said reflection layer and said filter layer.

15. An optical information recording medium as defined in claim 13 or 14, **characterized by** another gap layer between said holographic recording layer and said filter layer.

16. An optical information recording medium as defined in any one of the preceding claims 1 to 15, **characterized in that** said optical information recording medium records information through coaxially irradiation with information-bearing light and reference light which generates interference fringes in said holographic recording layer by superposition between said information-bearing light and reference light.

17. A method for manufacturing an optical information recording medium having a recording layer between a transparent top substrate and a bottom substrates in which optical information is recorded by the use of holography, **characterized by** the steps of:
preparing a transparent top substrate and a bottom substrates both of which are shaped in the form of a disk and have spindle holes, respectively, and at least one of which has at least one of an inner annular spacer provided around said spindle hole and an outer annular spacer having an inlet provided along a periphery thereof is formed as integral part thereof;
bonding said transparent top substrate and said bottom substrates together through said inner annular spacer and said outer annular spacer so as thereby to define a cell having a specified depth between said transparent top substrate and said bottom substrates;
infusing said cell with a holographic recording material through said inlet; and
curing said holographic recording material to form a holographic recording layer in said cell.

18. A method for manufacturing an optical information recording medium as defined in claim 17, **characterized in that** said outer annular spacer comprises top and bottom mating annular spacer halves having openings, respectively, which are formed as integral parts of said transparent top substrate and said bottom substrate, respectively, and wherein said transparent top substrate and said bottom substrate are turned relatively to each other so as to bring said openings into alignment with each other, thereby forming said inlet before infusion of said holographic recording material into said cell and to bring said openings out of alignment, thereby closing said inlet after cure of said holographic recording material.

19. A method for recording information in the optical information recording medium as defined in claims 1 through 16, **characterized by** irradiating said optical information recording medium coaxially with information-bearing light and reference light so as thereby to generate interference fringes in said holographic recording layer of said optical information recording medium by superposition between said information-bearing light and reference light

20. An information recording method as defined in claim 19, **characterized in that** said information-bearing light has intensity distributed in two dimension and said reference light has nearly uniform intensity.

21. A method for reproducing information from an optical information recording medium as defined in claims 1 through 16, **characterized by** irradiating said optical information recording medium with reference light so as to regenerate information bearing-reproduction light from said holographic recording layer.
